# EUROPEAN PATENT APPLICATION

(11) **EP 4 699 849 A1**
(43) Date of publication of application: **25.02.2026**
(21) Application number: 23936498.7
(22) Date of filing: 27.12.2023
(51) Int. Cl.: B60L 15/00, B60L 1/00, B60L 58/10, B60L 3/00

(54) **VEHICLE AND POWER DOMAIN INTEGRATED CONTROLLER**

(30) Priority: 05.05.2023 CN 202310502517
(71) Applicant: Yutong Bus Co., Ltd., Zhengzhou, Henan 450061 (CN)
(72) Inventor: ZHENG, Wei, Zhengzhou, Henan 450061 (CN); ZHANG, Guangli, Zhengzhou, Henan 450061 (CN); ZHAO, Chenguang, Zhengzhou, Henan 450061 (CN); JIA, Tongqi, Zhengzhou, Henan 450061 (CN); YANG, Shaoqing, Zhengzhou, Henan 450061 (CN); LOU, Feipeng, Zhengzhou, Henan 450061 (CN); XIAO, Dandan, Zhengzhou, Henan 450061 (CN)
(74) Representative: Gulde & Partner
(86) International application number: PCT/CN2023/142189
(87) International publication number: WO 2024/230194

(57) **Abstract**

The present invention relates to a vehicle and a power domain integrated controller, which belongs to the field of new energy battery electric vehicles. The controller includes a motor control module, a subsidiary drive control unit, an integrated DCDC module, and a power distribution module that are integrated. One end of the motor control module, the subsidiary drive control unit, the integrated DCDC module, and a power distribution module is configured to connect to a power supply system through a corresponding line, and an other end is configured to connect to a corresponding vehicle device. The integrated DCDC module includes a DCDC unit and a battery monitoring unit. The DCDC unit is configured to convert high voltage electricity provided by the power supply system into low voltage electricity and provide the low voltage electricity to a low-voltage vehicle device. The battery monitoring unit is configured to monitor a status of the power supply. The controller features a high integration level, which reduces a quantity of existing parts and lowers costs.

## Description

### TECHNICAL FIELD

The present invention relates to a vehicle and a power domain integrated controller, which belongs to the field of new energy battery electric vehicles.

### BACKGROUND

In components such as a power battery system of a new energy battery electric vehicle (including a battery pack, a battery controller, battery charging and power distribution, battery heating and power distribution, an insulation monitoring unit, a high-precision current Hall sensor, and a battery monitoring DCDC converter), a high-voltage control system (a motor controller, an oil pump/air pump controller, a vehicle DCDC converter), and a high-voltage power distribution system (a vehicle superstructure junction box, electric defrosting/electric heating power distribution, and electric air conditioning power distribution), the battery system, a high-voltage electric control system, and the high-voltage power distribution system are integrated in a plurality of manners based on application requirements of different vehicle models.

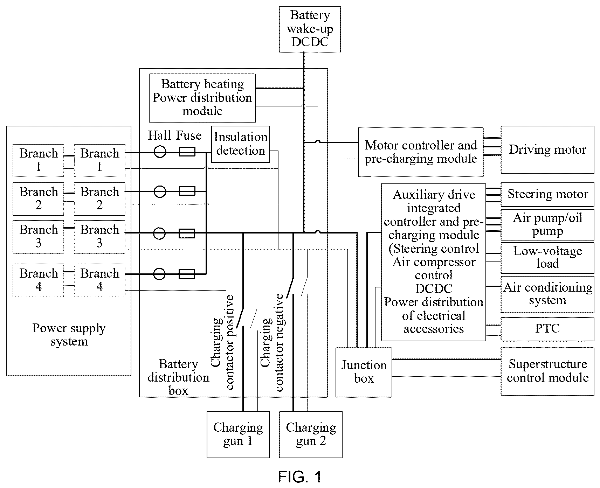

A high-voltage system of a current commercial vehicle has a certain integration level. As shown in FIG. 1, the overall topological structure is a solution that includes a power battery pack as a power system + a battery distribution box + an all-in-one controller (an auxiliary drive integrated controller) + a junction box. The battery distribution box has a built-in Hall sensor and a built-in fuse, and can perform insulation monitoring, battery heating and distribution, and battery charging and power distribution. The battery monitoring DCDC converter, the motor controller, the auxiliary drive integrated controller, and the junction box draw power from the battery distribution box. The manner has a relatively low integration level, and a battery high-voltage box, the junction box, and a power distribution portion of an all-in-one auxiliary drive controller have overlapping functions, which increases the space and cost of the vehicle. The single motor controller and the auxiliary drive integrated controller cannot share the high-voltage pre-charge and low-voltage control circuits. Therefore, the system shown in FIG. 1 has a low integration level and high system costs, and is not conducive to reducing an arrangement space of the vehicle.

### SUMMARY

A purpose of the present invention is a vehicle and a power domain integrated controller, so as to resolve problems of a low integration level, a waste of vehicle space, and high costs of an existing battery high-voltage system.

To achieve the above purpose, the present invention includes the following solution.

A power domain integrated controller of the present invention includes a motor control module, a subsidiary drive control unit, an integrated DCDC module, and a power distribution module that are integrated. One end of the motor control module, the subsidiary drive control unit, the integrated DCDC module, and the power distribution module is configured to connect to a power supply system through a corresponding line, and an other end is configured to connect to a corresponding vehicle device. The integrated DCDC module includes a DCDC unit and a battery monitoring unit. The DCDC unit is configured to convert high voltage electricity provided by the power supply system into low voltage electricity and provide the low voltage electricity to a low-voltage vehicle device. The battery monitoring unit is configured to monitor a status of the power supply system.

The beneficial effects are as follows: Through the power domain integrated controller of the present invention, an architecture of a high-voltage system of the vehicle is simplified, the motor control module, the subsidiary drive control unit, the integrated DCDC module, and the power distribution module are integrated, and a quantity of parts and components is reduced through integrated design and centralized power distribution design, thereby realizing weight reduction and cost reduction of the vehicle. The integrated DCDC module of the present invention includes the DCDC unit and the battery monitoring unit, so that a voltage on a high-voltage side can be converted into a low voltage and the low voltage is provided to the low-voltage vehicle device, and the status of the battery can be monitored, to prevent serious battery depletion and battery death as a result of the vehicle being powered off for a long time. In addition, during power-off charging, a battery level is monitored to prevent excessive charging time.

Further, the controller further includes a timing wake-up module. The timing wake-up module includes a voltage conversion unit and a wake-up unit. A high-voltage side of the voltage conversion unit is connected to a high-voltage line in the integrated controller, and a low-voltage side of the voltage conversion unit is connected to the integrated DCDC module to supply power to the battery monitoring unit in the integrated DCDC module. The wake-up unit is configured to generate, based on a vehicle power-off signal, an enable signal for controlling operation of the integrated DCDC module.

The beneficial effects are as follows: The controller further includes the timing wake-up module, which can provide low voltage electricity and work enable for the integrated DCDC module based on the power-off signal after the vehicle is powered off. After the vehicle is powered off, the wake-up unit in the timing wake-up module generates, through the power-off signal, an enable signal for controlling operation of the battery monitoring unit in the integrated DCDC module, to control the battery monitoring unit to monitor the status of the battery. The wake-up unit may set an interval to wake up the battery monitoring unit to prevent serious battery depletion and battery death as a result of the vehicle being powered off for a long time. In addition, during power-off charging, a battery level is monitored to prevent excessive charging time.

Further, an input side of the controller is provided with a plurality of branch circuits, one end of each of the branch circuits is configured to connect to each branch in the power supply system, and other ends are connected in parallel to form a direct current (DC) bus.

Further, the timing wake-up module, the motor control module, the subsidiary drive control unit, the integrated DCDC module, and the power distribution module are separately connected to the DC bus.

The beneficial effects are as follows: The timing wake-up module, the motor control module, the subsidiary drive control unit, and the integrated DCDC module are connected in parallel to one branch and are connected to the DC bus through the branch, so that the motor control module, the subsidiary drive control unit, and the integrated DCDC module can share a capacitor and a pre-charging circuit, and costs of the pre-charging circuit are reduced.

Further, each branch circuit is provided with a Hall sensor and a fuse.

Further, the controller is further provided with an insulation detection module. The insulation detection module is arranged on the DC bus.

Further, a charging port of the controller is connected to the DC bus through a high-voltage charging line, and a high-voltage contactor is arranged on the high-voltage charging line to control the charging port.

Further, the controller is provided with a filter. One end of the filter is connected to the DC bus, and an other end is connected to an input side of each of the motor control module, the subsidiary drive control unit, and the integrated DCDC module.

The beneficial effects are as follows: The controller of the present invention is provided with a filter, which can suppress battery interference and improve electromagnetic compatibility of the system.

Further, the controller further includes a pre-charging circuit. The pre-charging circuit is arranged on a line between the DC bus and the power distribution module.

The beneficial effects are as follows: The pre-charging circuit is further connected to the line between the DC bus and the power distribution module of the integrated controller of the present invention, and the power distribution module is protected through the pre-charging circuit.

A vehicle of the present invention includes a power supply system and a vehicle device. The vehicle further includes a power domain integrated controller. An input side of the power domain integrated controller is configured to connect to the power supply system, and an output side is configured to connect to a corresponding vehicle device. The power domain integrated controller is the power domain integrated controller as described in any of the above.

The beneficial effects are as follows: In the vehicle of the present invention, an architecture of a high-voltage system of the vehicle is simplified, including the power supply system, the vehicle device, and the power domain integrated controller. The motor control module, the subsidiary drive control unit, the integrated DCDC module, and the power distribution module in the power domain integrated controller are integrated, and a quantity of parts and components is reduced through integrated design and centralized power distribution design, thereby realizing weight reduction and cost reduction of the vehicle. The integrated DCDC module of the present invention includes the DCDC unit and the battery monitoring unit, so that a voltage on a high-voltage side can be converted into a low voltage and the low voltage is provided to the low-voltage vehicle device, and the status of the power supply can be monitored, to prevent serious battery depletion and battery death as a result of the vehicle being powered off for a long time. In addition, during power-off charging, a battery level is monitored to prevent excessive charging time.

### BRIEF DESCRIPTION OF THE DRAWINGS

FIG. 1 is a schematic diagram of a topological structure of a high-voltage system of a vehicle in the prior art.
FIG. 2 is a schematic diagram of a topological structure of a high-voltage system of a vehicle in an embodiment of a high-voltage vehicle system of the present invention.

### DETAILED DESCRIPTION

The present invention is further described in detail below with reference to the accompanying drawings.

### Vehicle embodiment:

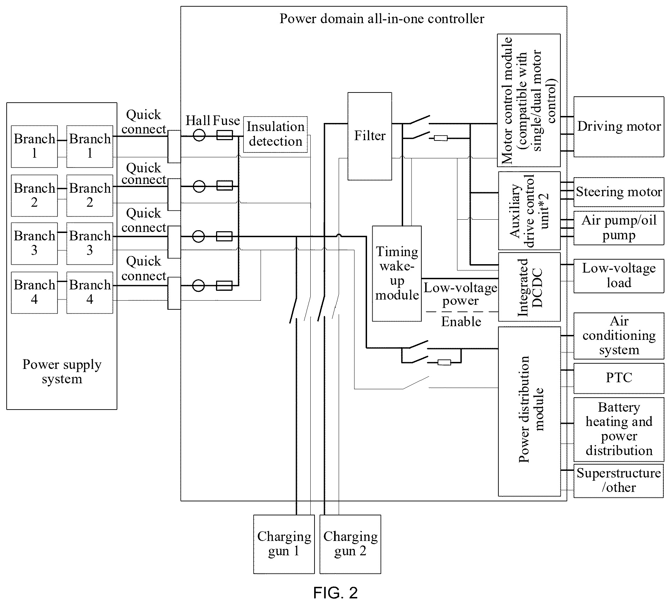

A high-voltage vehicle system as shown in FIG. 2 includes a power supply system, a power domain integrated controller, and a vehicle device. An input side of the power domain integrated controller is connected to the power supply system, and an output side is connected to a corresponding vehicle device to provide power for the vehicle device and control the vehicle device.

The power domain integrated controller in this embodiment includes a motor control module, a subsidiary drive control unit (an oil pump/air pump controller), an integrated DCDC module, and a power distribution module that are integrated. One end of each module is configured to connect to the power supply system through a corresponding line, and an other end is configured to connect to a corresponding vehicle device. The input side of the controller is provided with a plurality of branch circuits. One end of each of the branch circuits is connected to each branch in the power supply system, and other ends are connected in parallel to form a direct current (DC) bus. The motor control module, the subsidiary drive control unit, and the integrated DCDC module are connected in parallel to the DC bus, and the power distribution module is also connected to the DC bus.

The integrated DCDC module includes a DCDC unit and a battery monitoring unit. A high-voltage side of the DCDC unit is connected to the DC bus, and a low-voltage side thereof is connected to a low-voltage vehicle device. The DCDC unit converts a voltage on the high-voltage side into a low voltage and provides the low voltage to the low-voltage vehicle device. The battery monitoring unit mainly monitors a status of a battery (including information such as a battery level and health status), and records a current battery status and sends the current battery status to a user terminal based on user requirements. The DCDC unit can convert high voltage electricity of a power battery into electricity (which is generally 24V or 12V) of an on-board low-voltage system. DCDC startup and shutdown may be implemented through different hard-wired enable and message control. In other words, each control unit sends a positive enable signal when the DCDC is required to operate, and sends an negative enable signal when the DCDC is required to shut down. After the negative enable, the DCDC shuts down.

Particularly, the power domain integrated controller in this embodiment further includes a timing wake-up module. The timing wake-up module includes a voltage conversion unit and a wake-up unit. A high-voltage side of the voltage conversion unit is connected to a high-voltage DC bus, and a low-voltage side thereof is connected to the integrated DCDC module to convert high voltage electricity of the DC bus into low voltage electricity. The wake-up unit generates, based on a vehicle power-off signal, an enable signal for controlling operation of the integrated DCDC module, and sends an enable command signal to the integrated DCDC module, so as to wake up the battery monitoring unit at a set time interval and control the battery monitoring unit to operate, and monitor a current battery status. Then monitoring of the battery is implemented through the battery monitoring unit when the vehicle is powered off, so as to avoid shortening a lifespan of the battery as a result of severe battery depletion caused by a prolonged power-off state, and avoid excessive charging time through monitoring of the battery level during charging. Specifically, the vehicle power-off signal may be generated through a power-off monitoring instruction of a battery management system. In other words, when the vehicle is powered off, the battery management system generates a power-off monitoring instruction and sends the power-off monitoring instruction to the wake-up unit, and the wake-up unit receives the power-off monitoring instruction and generates an enable signal for controlling operation of the integrated DCDC module. The power-off signal may further be obtained through collection of a voltage on the vehicle device. When the voltage of the vehicle device is zero, it is considered that the vehicle is powered off, and the wake-up unit wakes up the battery monitoring unit in the integrated DCDC module after receiving the power-off monitoring instruction. The enable signal for controlling the operation of the integrated DCDC module is generated at the set time interval. The time interval may be set based on an actual situation.

The input side of the controller is provided with a plurality of branch circuits. One end of each of the branch circuits is connected to each branch in the power supply system. Each branch circuit on the input side of the controller is provided with a Hall sensor and a fuse. The input side of the power domain integrated controller is provided with a copper busbar integrated quick-connect socket, so as to shorten a high-voltage connection path. The power supply system is provided with 4 output channels. Therefore, the input side of the power domain integrated controller may accommodate a maximum of 4 battery input channels. To improve safety of the high-voltage system, the battery inputs in this embodiment adopt quick-connect configuration. The 4 battery inputs are all provided with the Hall sensor and the fuse.

A position at which the branches on the input side of the power domain integrated controller are connected in parallel is provided with an insulation detection module. The insulation detection module is a detection module for detecting resistance values between a battery anode and a vehicle frame and between a battery cathode and the vehicle frame.

The DC bus is further provided with a charging circuit, which may accommodate charging inputs from up to 2 branches. In other words, two charging ports connected to a charging gun may be provided. Each branch of the charging circuit is designed with a high-voltage contactor on a positive electrode and a negative electrode, which can avoid the inability to be disconnected from the charging gun as a result of a single-point failure of a certain contactor, thereby improving charging safety.

The power distribution module in this embodiment can implement power distribution for an air conditioning system, power distribution for a PTC (an electric heater of the vehicle generates heat after being connected to DC high voltage electricity, to increase a temperature inside the vehicle), power distribution for battery heating (the DC high voltage electricity is connected to the battery, and if a heating film exists in a power battery, the heating film may generate heat to increase a temperature inside a battery pack, which helps increase the temperature inside the battery pack as soon as possible in a low-temperature environment, thereby implementing a normal output of the battery), and power distribution for a superstructure (an inverter control module that converts the DC electricity of the power battery into three-phase alternating current (AC) electricity for driving the superstructure motor, drives the superstructure motor to accelerate and decelerate rotation, and changes the rotation direction, and finally realizes functions such as goods box lifting and lowering/tilting and mixing of a mixer truck container), realize soft start of high-voltage power supply for loads, and share a main contactor and a negative contactor to improve reliability of power distribution, thereby preventing the power battery from being drained due to short-circuit faults of electrical accessories.

The power domain integrated controller in this embodiment further includes a pre-charging circuit. The pre-charging circuit is arranged on a line between the DC bus and the power distribution module, thereby protecting the power distribution module.

The motor control module, the subsidiary drive control unit (the oil pump/air pump controller), and the integrated DCDC module of the vehicle of the power domain integrated controller in this embodiment share the pre-charging circuit and a capacitor, thereby reducing costs of the pre-charging circuit. The DCDC module shares a cooling water channel with the motor control module and the subsidiary drive control unit (the oil pump/air pump controller), and the power can cover low-voltage power demands of the vehicle.

The motor control module is compatible with both single-motor output and dual-motor application scenarios, and mainly functions to control the drive motor. Meanwhile, dual-motor controller modules are connected in parallel to enable driving of 1 high-power motor, which can meet application requirements of small commercial vehicles, medium-sized commercial vehicles, and heavy-duty commercial vehicles. A power distribution branch of the motor controller (including the motor control module, the subsidiary drive control unit, and the integrated DCDC module that are connected in parallel) is provided with a filter. One end of the filter is connected to the DC bus, and an other end is connected to an input side of the power distribution branch of the motor controller, so as to suppress battery interference and improve electromagnetic compatibility of the system.

The subsidiary drive control unit is mainly connected to a steering motor and the oil pump/air pump, and converts a DC of the power battery into a three-phase AC to drive the oil pump motor/air pump motor, driving the motor to accelerate and decelerate rotation, and changes the rotation direction.

### Embodiment of the power domain integrated controller:

The power domain integrated controller as shown in FIG. 2 includes modules such as a Hall sensor, a fuse, an insulation monitoring module, a pre-charging circuit (a charging distribution circuit), a battery power distribution module, a motor control module (the motor controller), a subsidiary drive control unit (an oil pump/air pump controller), an integrated DCDC module of the vehicle (with a battery monitoring function), and a timing wake-up module. One end of each module is connected to a power supply system through a corresponding line, and an other end is configured to connect to a corresponding vehicle device. The integrated DCDC module includes a DCDC unit and a battery monitoring unit. The DCDC unit converts a voltage provided by the power supply system into low voltage electricity and provides the low voltage electricity to a low-voltage vehicle device. The battery monitoring unit monitors a status of the power supply. Specific implementations have been described in detail in the vehicle embodiment, and details are not described herein again.

## Claims

1. A power domain integrated controller, comprising a motor control module, a subsidiary drive control unit, an integrated DCDC module, and a power distribution module that are integrated, wherein one end of the motor control module, the subsidiary drive control unit, the integrated DCDC module, and the power distribution module is configured to connect to a power supply system through a corresponding line, an other end is configured to connect to a corresponding vehicle device, the integrated DCDC module comprises a DCDC unit and a battery monitoring unit, the DCDC unit is configured to convert high voltage electricity provided by the power supply system into low voltage electricity and provide the low voltage electricity to a low-voltage vehicle device, and the battery monitoring unit is configured to monitor a status of the power supply system.

2. **The** power domain integrated controller according to claim 1, further comprising a timing wake-up module, wherein the timing wake-up module comprises a voltage conversion unit and a wake-up unit, a high-voltage side of the voltage conversion unit is connected to a high-voltage line in the integrated controller, a low-voltage side of the voltage conversion unit is connected to the integrated DCDC module to supply power to the battery monitoring unit in the integrated DCDC module, and the wake-up unit is configured to generate, based on a vehicle power-off signal, an enable signal for controlling operation of the integrated DCDC module.

3. **The** power domain integrated controller according to claim 2, wherein an input side of the controller is provided with a plurality of branch circuits, one end of each of the branch circuits is configured to connect to each branch in the power supply system, and other ends are connected in parallel to form a direct current (DC) bus.

4. The power domain integrated controller according to claim 3, wherein the timing wake-up module, the motor control module, the subsidiary drive control unit, the integrated DCDC module, and the power distribution module are separately connected to the DC bus.

5. The power domain integrated controller according to claim 3, wherein each branch circuit is provided with a Hall sensor and a fuse.

6. The power domain integrated controller according to claim 2 or 3, further provided with an insulation detection module, wherein the insulation detection module is arranged on the DC bus.

7. The power domain integrated controller according to claim 3, wherein a charging port of the controller is connected to the DC bus through a high-voltage charging line, and a high-voltage contactor is arranged on the high-voltage charging line to control the charging port.

8. The power domain integrated controller according to claim 2, provided with a filter, wherein one end of the filter is connected to the DC bus, and an other end is connected to an input side of each of the motor control module, the subsidiary drive control unit, and the integrated DCDC module.

9. The power domain integrated controller according to claim 1, further comprising a pre-charging circuit, wherein the pre-charging circuit is arranged on a line between the DC bus and the power distribution module.

10. A vehicle, comprising a power supply system and a vehicle device, wherein the vehicle further comprises a power domain integrated controller, an input side of the power domain integrated controller is configured to connect to the power supply system, an output side is configured to connect to a corresponding vehicle device, and the power domain integrated controller is the power domain integrated controller according to any of claims 1 to 9.
